(19) Europäisches Patentamt European Patent Office Office européen des brevets

(11) EP 3 096 534 A1

(12) **EUROPEAN PATENT APPLICATION**

(43) Date of publication:
23.11.2016 Bulletin 2016/47

(21) Application number: 15290135.1

(22) Date of filing: 22.05.2015

(51) Int Cl.:
H04R 1/00 (2006.01)     G06F 1/32 (2006.01)
H04R 3/00 (2006.01)     G10L 25/78 (2013.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: NXP B.V.
5656 AG Eindhoven (NL)

(72) Inventor: Le Faucher, Laurent
06902 Valbonne Sophia-Antipolis, Paca (FR)

(74) Representative: Miles, John Richard
NXP Semiconductors
Intellectual Property and Licensing
Red Central
60 High Street
Redhill, Surrey RH1 1SH (GB)

(54) **MICROPHONE CONTROL FOR POWER SAVING**

(57)    Systems and methods of switching a mode of operation of a microphone embodied in a mobile device are disclosed. Accordingly the microphone is set to operate in a low power operational mode. The microphone captures an acoustic signal, coverts the acoustic signal into a digital signal and inputs the digital signal into a digital signal processor. The digital signal processor calculates an energy of the input acoustic signal and sets the microphone to operate in a high power operational mode if the calculated energy is above a preconfigured energy threshold.

Fig. 2

**Description**

**BACKGROUND**

Mobile devices such as mobile phones and tablet computers have become immensely popular in the recent years. Mobile devices that are currently available to users offer high grade computing power and speech synthesis. However, mobile devices are marred with one problem. In order to provide this high grade computing power, these devices need more power. Mobile devices are typically powered by rechargeable batteries. In other types of applications, using a larger battery or power source could handle these high power requirements. However, in case of mobile devices, factors such as overall device size, weight and cost prohibit adding larger or additional batteries. Therefore, it is important that the internal sub-systems of mobile devices are designed to consume less power without sacrificing the performance (at least significantly) and utility of these sub-systems.

**SUMMARY**

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one embodiment, a method of switching a mode of operation of a microphone embodied in a mobile device is disclosed. Accordingly the microphone is set to operate in a low power operational mode. The microphone captures an acoustic signal, coverts the acoustic signal into a digital signal and inputs the digital signal into a digital signal processor. The digital signal processor calculates an energy of the input acoustic signal and sets the microphone to operate in a high power operational mode if the calculated energy is above a preconfigured energy threshold.

In another embodiment, a computer readable media non-transitorily stored in a mobile device is disclosed. The computer readable media includes programming instructions which when executed by a processor embodied in the mobile device perform an operation of switching a mode of operation of a microphone embodied in the mobile device. The operation includes setting the microphone to operate in a low power operational mode, capturing an acoustic signal through the microphone, calculating an energy of the input acoustic signal and setting the microphone to operate in a high power operational mode if the calculated energy is above a preconfigured energy threshold.

In yet another embodiment, a mobile device is disclosed. The mobile device includes a microphone. The microphone is configured to capture an acoustic signal and convert the input acoustic signal into a digital signal. The mobile device also includes a digital signal processor coupled to the microphone. The digital signal processor provides a clock signal to the microphone and the microphone is configured to operate according to the input clock signal. The digital signal processor is configured to set the microphone to operate in a low power operational mode, to calculate an energy of the input acoustic signal, and to set the microphone to operate in a high power operational mode if the calculated energy is above a preconfigured energy threshold.

The microphone is set to operate in the high power operational mode or the low power operational mode through changing a clock frequency of the microphone. The clock frequency in the low power mode is lower than the clock frequency in the high power mode. In one embodiment, a pre-recognized speech pattern may be used to determine if a known speech is present in the input acoustic signal and the microphone set to operate in a high power operational mode when the known speech is present and the calculated energy is above the preconfigured energy threshold. In one embodiment, the energy calculation on the input acoustic signal are performed continuously at preselected intervals and the microphone is set to operation in the low power operational mode when the calculated energy goes below the preconfigured energy threshold.

**BRIEF DESCRIPTION OF THE DRAWINGS**

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:

FIG. 1 is a schematic of a mobile device showing a digital signal processor and microphones;

FIG 2 illustrates a method for switching microphone (s) to the normal mode from the low power mode in accordance with one or more embodiments of the present disclosure; and

FIG 3 illustrates a method for switching microphone (s) to the low power mode from the normal mode in accordance with one or more embodiments of the present disclosure.

**DETAILED DESCRIPTION**

Virtually all mobile devices such as phones and tablet computers include one or more microphones to capture voice. Many of such devices includes feature that enable a user to operate the device via voice commands. Newer devices includes more extensive user to device interactions via the user's voice. One example of such feature is Apple's Siri™ feature. Siri™ lets the user use his/her voice to send messages, schedule meetings, place phone calls, and more. However, in order to effectively use such features, the device's microphone(s) must be operating in the normal operating mode continuously. Unfortunately, keeping the microphone(s) in continuous normal operating mode consumes more battery power and that leads to quicker discharge of the device's battery.

Embodiments described herein enables voice detection with minimal power consumption using voice activity detection. A decision logic determines where human voice is present in the signal captured by the device's microphones. In one embodiment, this voice detection is used to control the sensitivity of the microphone by changing the clock speed that is used to operate the microphones.

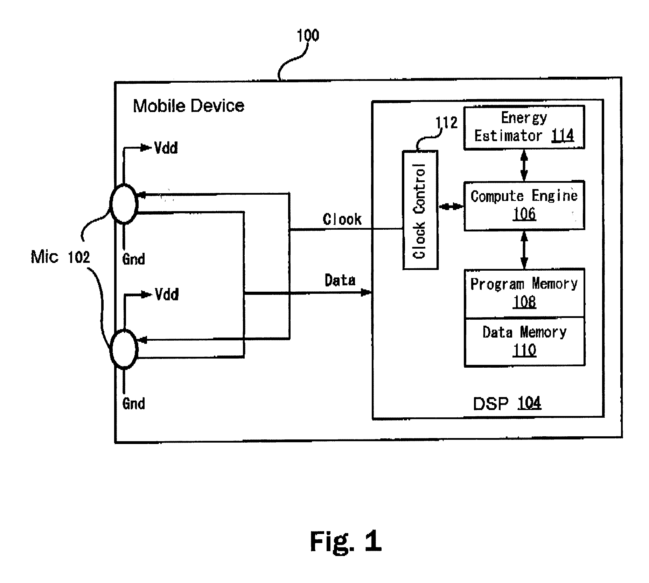

Figure 1 illustrates a schematic of an exemplary mobile device 100 including a digital signal processor (DSP) 104. The DSP 104 includes a compute engine 106 and a memory. The memory may be divided into a program memory 108 and a data memory 110. The program memory 108 typically stores the programming instructions that the DSP 104 uses to process data. The data memory 110 is typically used for storing the information to be processed. The compute engine 106 performs the math processing, accessing the programming instructions from the program memory 108 and the data from the data memory 110. The structure and operations of the DSP 104 are well known in the art. Therefore, an elaborate discussion is being omitted so as not to obscure the present disclosure. The compute engine 106 may be programmed, using the programming instructions, to control other components of the DSP 104. For example, the compute engine 106 may send control signals to a clock control 112 in the DSP 104 to alter the clock output.

The mobile device 100 also includes one or more microphones 102. The microphone 102 includes a circuit (not shown) to convert acoustic signals to digital signals typically with the use of sampling circuits. In one embodiment, the microphone 102 operates in a low power mode in which a low sampling frequency is used. On the other hand, a higher frequency is used when in a normal operational mode. The sampling frequency corresponds to the bit clock rate that is inputted to the microphone 102 from the DSP 104. In one example, the bit clock rate may vary from 0.2MHz to 10Mhz. Typically, the bit clock rate may vary from 0.321MHz in the low power mode to 4.8 MHz in the normal power mode. However, other clock frequency ranges may be used depending upon the specifications of the DSP 104 and the microphone 102.

In one embodiment, the microphone 102 is a Pulse Density Modulation (PDM) microphone, which is also called a digital microphone. The microphone 102 may include a microphone element. Typically the microphone element is an electret capsule. The microphone 102 may also include one or more of an analog preamplifier, a PDM modulator and an interface logic. The analog signal from the microphone element is first amplified, and then sampled at a a selected rate and quantized in the PDM modulator. Typically, the PDM modulator combines the operations of quantization and noise shaping and the output of the PDM modulator is a single bit that is fed to the DSP 104. The noise shaping ensures that the noise in the audio band is relatively low, while the noise above the audio band is relatively high. The interface logic is responsible for accepting a master clock and transmitting the sampled bitstream. The DSP 104 provides the master clock to the PDM microphone 102. The clock rate defines the sampling rate of the system, as well as the rate at which bits are transmitted on the data line. Although there is no defined standard, typically the oversampling ratio is 64. For example, in a normal mode, to achieve a bandwidth of 24 kHz, a master clock frequency of 3.072 MHz is needed.

The noise incurred by reducing the word length is substantial. For example, the noise in a 1-bit system is about 90 dB higher than the noise in a 16-bit system. Noise shaping distributes that noise in a high-pass fashion, but it does not reduce the total noise level. In an imaging application, where most of the image content is at low frequency, the noise can be pushed to high frequencies (where it might obscure some of the signal). In audio, however, mid- and high-frequencies are very important, and very audible. It is simply not possible to achieve acceptable results if the word length is reduced to one bit, even with noise shaping. The resulting high-pass noise is clearly audible. The answer is to use a higher sampling rate. However, using a higher sampling rate leads to higher energy consumption.

Typically, the power consumption in the microphone 102 depends on the clock frequency. At lower clock frequencies, the power consumption goes down compared to the power consumption at the higher clock frequencies. However, the sensitivity and quality of the microphone 102 becomes poorer at low frequency clock rates due to poor noise shaping.

The DSP 104 may include an energy estimator 114 module. The energy estimator 114 may be implemented in hardware or software. If implemented in software, the energy estimator 114 programming instructions reside in the program memory 108 and these programming instructions are executed by the compute engine 106. The energy estimator 114 is configured to calculate energy of an input audio signal that is captured by the microphone 102. Calculating signal energy is well known in the art, as for example, the energy Es of a continuous-time signal x(t) can be defined as:

$$E_s \;=\; \langle x(t), x(t) \rangle \;=\; \int_{-\infty}^{\infty} |x(t)|^2 dt$$

A threshold energy value is stored in the data memory 110 and this threshold is used for making determination whether the microphone 102 should be switched to a low power mode or to a normal power mode. In one exemplary embodiment, when the microphone 102 needs to be switched to a normal (e.g., high) power mode based on the configured energy threshold, the compute engine 106 instructs the clock control 112 to increase the clock, frequency to the microphone 102. Similarly, based on the input signal energy and the stored energy threshold, the clock control 112 may also lower the clock rate to the microphone 102.

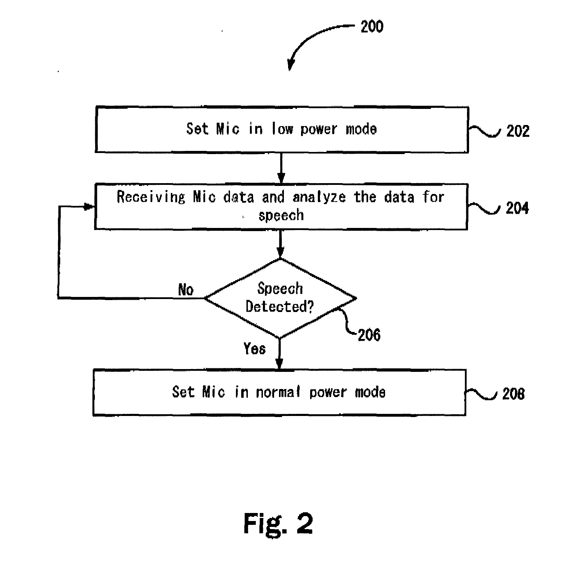

Figure 2 illustrates an exemplary method 200 for switching microphone (s) 102 to the normal (high power) mode from the low power mode. Accordingly, at step 202, the microphone 102 is set to operate in a low power mode by setting the clock frequency at a value in the lower range of the frequency range as specified above. At step 204, the acoustic signal received at the microphone 102 is converted into a digital signal and fed to the DSP 104. The DSP 104 estimates the energy of the input signal. Note that the energy would be higher when the microphone 102 is capturing the user's speech who is speaking directly to the microphone 102 as opposed to when the microphone 102 is capturing background noise or a voice signal coming from a relatively greater distance.

At decision step 206, based on the configurable energy threshold, a determination is made if the user's speech is present in the input voice signal. If yes, at step 208, the DSP 104 raises the clock rate input to the microphone 102. If not, the control goes back to step 204.

Note that in some embodiments, the device 200 may be "trained" to recognize the user's voice and the decision to increase the clock rate may be based on the presence of the user's voice. The decision may also be based on the combination of the user's voice for which the device 100 has been "trained" and the energy level of the input voice signal.

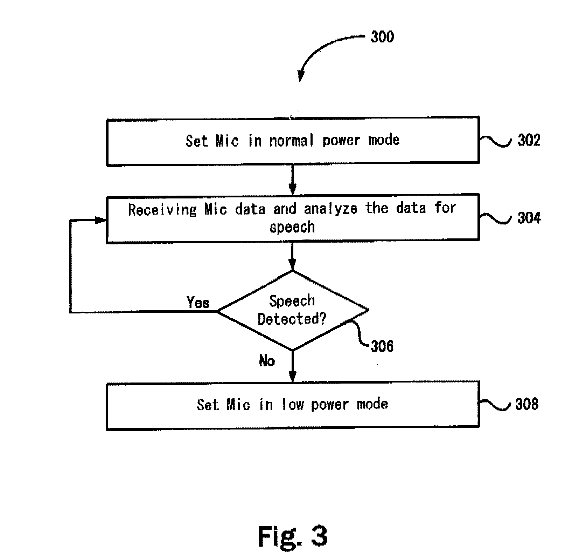

Figure 3 illustrates an exemplary method 300 for switching microphone (s) 102 to the low power mode from the normal (high power) mode. Accordingly, at step 302 the microphone 102 is set to operate in the normal power mode. At step 304, the acoustic signal received at the microphone 102 is converted into a digital signal and fed to the DSP 104 and analyzed to detect speech based on the input signal energy estimates or calculations. At decision step 306, a determination is made if the input signal contained speech and if no, at step 308, the microphone 102 is set to operate in a low power mode. If the speech signal is found in the input signal, the control goes back to step 304.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all example, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

**Claims**

1. A method of switching a mode of operation of a microphone embodied in a mobile device, the method comprising:

    setting the microphone to operate in a low power operational mode;
    capturing an acoustic signal;
    calculating an energy of the input acoustic signal; and
    setting the microphone to operate in a high power operational mode if the calculated energy is above a preconfigured energy threshold.

2. The method of claim 1, wherein the microphone is set to operate in the high power operational mode through changing a clock frequency of the microphone.

3. The method of claim 2, wherein the microphone is set to operate in the low power operational mode through changing the clock frequency of the microphone, wherein the clock frequency in the low power mode is lower than the clock frequency in the high power mode.

4. The method of any preceding claim, further comprising using a pre-recognized speech pattern to determine if a known speech is present in the input acoustic signal and the microphone set to operate in a high power operational mode when the known speech is present and the calculated energy is above the preconfigured energy threshold.

5. The method of any preceding claim, further comprising continuously calculating the energy of the input acoustic signal and setting the microphone to operation in the low power operational mode when the calculated energy goes below the preconfigured energy threshold.

6. A computer readable media non-transitorily stored in a mobile device, the computer readable media including programming instructions which when executed by a processor embodied in the mobile device perform an operation of switching a mode of operation of a microphone embodied in the mobile device, the operation includes:

    setting the microphone to operate in a low power operational mode;
    capturing an acoustic signal;
    calculating an energy of the input acoustic signal; and
    setting the microphone to operate in a high power operational mode if the calculated energy is above a preconfigured energy threshold.

7. The computer readable media of claim 6, wherein the microphone is set to operate in the high power operational mode through changing a clock frequency of the microphone.

8. The computer readable media of claim 7, wherein the microphone is set to operate in the low power operational mode through changing the clock frequency of the microphone, wherein the clock frequency in the low power mode is lower than the clock frequency in the high power mode.

9. The computer readable media of any of claims 6 to 8, wherein the operation further including continuously calculating the energy of the input acoustic signal and setting the microphone to operation in the low power operational mode when the calculated energy goes below the preconfigured energy threshold.

10. The computer readable media of any of claims 6 to 9, further comprising the programming instructions for performing:

    using a pre-recognized speech pattern to determine if a known speech is present in the input acoustic signal and the microphone set to operate in a high power operational mode when the known speech is present and the calculated energy is above the preconfigured energy threshold.

11. A mobile device, comprising:

    a microphone, wherein the microphone is configured to capture an acoustic signal and convert the input acoustic signal into a digital signal;
    a digital signal processor coupled to the microphone wherein the digital signal processor provides a clock signal to the microphone and the microphone is configured to operate according to the input clock signal, wherein the digital signal processor is configured:

to set the microphone to operate in a low power operational mode;
to calculate an energy of the input acoustic signal; and
to set the microphone to operate in a high power operational mode if the calculated energy is above a preconfigured energy threshold.

12. The mobile device of claim 11, wherein the microphone is set to operate in the high power operational mode through changing a clock frequency of the microphone.

13. The mobile device of claim 12, wherein the microphone is set to operate in the low power operational mode through changing the clock frequency of the microphone, wherein the clock frequency in the low power mode is lower than the clock frequency in the high power mode.

14. The mobile device of any of claims 11 to 13, wherein the digital signal processor is further configured to use a pre-recognized speech pattern to determine if a known speech is present in the input acoustic signal and the microphone set to operate in a high power operational mode when the known speech is present and the calculated energy is above the preconfigured energy threshold.

15. The mobile device of any of claims 11 to 14, wherein the digital signal processor is further configured to continuously calculating the energy of the input acoustic signal and setting the microphone to operation in the low power operational mode when the calculated energy goes below the preconfigured energy threshold.

100

Mobile Device

Energy
Estimator 114

112

Clock Control

Compute Engine
106

Vdd

Clock

Mic 102

Gnd

Data

Program Memory
108

Vdd

Data Memory
110

Gnd

DSP 104

# Fig. 1

- 200

```
┌─────────────────────────────────────────────┐
│          Set Mic in low power mode           │ ⌇ 202
└─────────────────────────────────────────────┘
                      │
                      ▼
┌─────────────────────────────────────────────┐
│  Receiving Mic data and analyze the data for │ ⌇ 204
│                   speech                     │
└─────────────────────────────────────────────┘
                      │
                      ▼
No            ◇ Speech  ◇
◀─────────────  Detected?
              ◇          ◇
                         └─206
                    Yes  │
                         ▼
┌─────────────────────────────────────────────┐
│          Set Mic in normal power mode        │ ⌇ 208
└─────────────────────────────────────────────┘
```

# Fig. 2

300

Set Mic in normal power mode ∿ 302

Receiving Mic data and analyze the data for speech ∿ 304

Yes — Speech Detected? — 306

No

Set Mic in low power mode ∿ 308

# Fig. 3

Europäisches
Patentamt

European
Patent Office

Office européen
des brevets

# EUROPEAN SEARCH REPORT

Application Number

EP 15 29 0135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/348345 A1 (FÜRST CLAUS ERDMANN [DK] ET AL) 27 November 2014 (2014-11-27) * paragraph [0014] - paragraph [0019] * * paragraph [0023] - paragraph [0027] * * paragraph [0032] - paragraph [0038] * * paragraph [0041] - paragraph [0045] * * paragraph [0049] - paragraph [0055] * * figures 1,2,3,5,6 * | 1-15 | INV. H04R1/00 G06F1/32 H04R3/00 ADD. G10L25/78 |
| A | J. Ramirez ET AL: "Voice Activity Detection. Fundamentals and Speech Recognition System Robustness" In: "Robust Speech Recognition and Understanding", 1 June 2007 (2007-06-01), I-Tech Education and Publishing, XP055180741, ISBN: 978-3-90-261308-0 DOI: 10.5772/4740, * page 1 * | 1-15 | |
| A | US 2014/343949 A1 (HUANG YEN-SON PAUL [US] ET AL) 20 November 2014 (2014-11-20) * the whole document * | 1-5 | TECHNICAL FIELDS SEARCHED (IPC) H04R G06F G10L |
| A | US 2013/223635 A1 (SINGER STEVEN MARK [GB] ET AL) 29 August 2013 (2013-08-29) * paragraph [0011] - paragraph [0021]; figure 1 * | 1-15 | |
| A | US 2015/049884 A1 (YE JINGHUA [CN]) 19 February 2015 (2015-02-19) * paragraph [0020] - paragraph [0028] * | 1-15 | |

-/--

The present search report has been drawn up for all claims

| Place of search | Date of completion of the search | Examiner |
|---|---|---|
| The Hague | 2 October 2015 | Valenzuela, Miriam |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

......................................................................

& : member of the same patent family, corresponding
 document

EPO FORM 1503 03.82 (P04C01)

Europäisches
Patentamt

European
Patent Office

Office européen
des brevets

# EUROPEAN SEARCH REPORT

Application Number

EP 15 29 0135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kirill Sakhnov ET AL: "Approach for Energy-Based Voice Detector with Adaptive Scaling Factor", IAENG International Journal of Computer Science, 19 November 2009 (2009-11-19), pages 394-399, XP055216468, Retrieved from the Internet: URL:http://doaj.org/search?source=%7B%22qu ery%22%3A%7B%22bool%22%3A%7B%22must%22%3A% 5B%7B%22term%22%3A%7B%22id%22%3A%223d5a28d 7eb2642d59739bfcda7722a1e%22%7D%7D%5D%7D%7 D%7D [retrieved on 2015-09-25] * the whole document * ----- | 1-15 | |

TECHNICAL FIELDS
SEARCHED (IPC)

The present search report has been drawn up for all claims

| Place of search | Date of completion of the search | Examiner |
|---|---|---|
| The Hague | 2 October 2015 | Valenzuela, Miriam |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 29 0135

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2015

| Patent document cited in search report | Publication date | Patent family member(s) | Publication date |
|---|---|---|---|
| US 2014348345 A1 | 27-11-2014 | US 2014348345 A1<br>US 2015043755 A1<br>WO 2014189931 A1 | 27-11-2014<br>12-02-2015<br>27-11-2014 |
| US 2014343949 A1 | 20-11-2014 | CN 104166532 A<br>US 2014343949 A1 | 26-11-2014<br>20-11-2014 |
| US 2013223635 A1 | 29-08-2013 | DE 102013003273 A1<br>GB 2501367 A<br>US 2013223635 A1 | 29-08-2013<br>23-10-2013<br>29-08-2013 |
| US 2015049884 A1 | 19-02-2015 | CN 104378723 A<br>US 2015049884 A1 | 25-02-2015<br>19-02-2015 |

EPO FORM P0459

For more details about this annex : see Official Journal of the European Patent Office, No. 12/82